# EUROPEAN PATENT SPECIFICATION

(11) **EP 2 522 553 B1**
(45) Date of publication and mention of the grant of the patent: **05.03.2014**
(21) Application number: 11165729.2
(22) Date of filing: 11.05.2011
(51) Int. Cl.: B60R 21/239

(54) **A system and method for air bag ventilation**
System und Verfahren für Aribagbelüftung
Système et procédé de ventilation d'airbag

(43) Date of publication of application: 14.11.2012
(73) Proprietor: Autoliv Development AB, 447 83 Vårgårda (SE)
(72) Inventor: Haglund, Lennart, SE-447, 32 Vargarda (SE); Rydsmo, Erik, SE-466, 95 Sollebrunn (SE); Svantesson, Anders, SE-448, 50 Tollered (SE)
(74) Representative: Beattie, Alex Thomas Stewart

(56) References cited:
- WO-A1-2006/136206
- US-A- 6 145 878

## Description

This invention relates to a system and method for air-bag ventilation, and in particular concerns ventilation of air-bag cushions following initial inflation.

As is well-known in the art, inflatable air-bags may be provided in a vehicle to protect occupants of the vehicle, or pedestrians, in the event of a crash. The vehicle is equipped with one or more sensors whose signals are analysed to determine whether or not an air-bag should be deployed. The sensors may include sensors to determine whether a crash situation is occurring (such as accelerometers and impact sensors), and may alternatively or in addition include sensors to predict whether a crash is likely or imminent (such as radar or lidar systems).

Regardless of the type of sensor used, once it has been determined that it is necessary to inflate an air-bag cushion it is generally necessary to proceed with the inflation very swiftly. Air-bags are therefore generally inflated using pyrotechnic charges, and are inflated to a high initial pressure.

Once an air-bag has been inflated, however, it is generally necessary to allow venting of the air-bag to allow the air-bag to be deflated relatively rapidly. For instance, in the case of the passenger air-bag mounted in the dashboard of a vehicle, in the event of a head-on collision the air-bag will inflate rapidly to occupy the space within the vehicle cabin between the passenger and the dashboard. As the crash occurs, the passenger will be thrown forwardly against the air-bag. At this point it is desirable for the air-bag to deflate under the forces arising from this impact, so that a passenger's body is brought to a halt with respect to the vehicle, as gently and gradually as the circumstances of the crash situation allow. If the air-bag remains fully inflated at its initial pressure throughout the crash, the likelihood is that the passenger will bounce off the air-bag and be thrown violently backward with respect to the vehicle. There is a high likelihood of injury associated with an occupant bouncing in this manner.

W02006/136206 discloses an airbag having a venting device defined by an upper part surrounding the venting opening and a lower part separated by a separating element, configuring a chamber in which the lower part has a closing element in its central part opposite the venting opening and includes a plurality of openings to receive the gas from the bag, said closing element being able to totally or partially close the venting opening when the inner pressure of the bag exceeds predetermined limits.

US6145878 discloses an air bag with an adjustable gas outlet port is disclosed. The cross-section of the gas outlet port is limited to a maximum value. The size of the gas outlet port determines a flow cross-section and thus a maximum possible gas outlet rate, which is thus limited to a predeterminable value. The value of the gas outlet cross-section is not altered during the restraint action. The value of the gas outlet cross-section is adjusted optimally to a respective occupant already before the air bag is inflated.

Many different types of air-bag ventilation have been proposed. It is an aim of the present invention to seek to provide an improved system and method for ventilation of an air-bag following inflation.

Accordingly, one aspect of the present invention provides an air-bag module comprising: a container having at least one rigid wall and defining an internal volume; an aperture formed in the rigid wall; and a cover which at least substantially covers the aperture in a closed position and substantially prevents the flow of gas through the aperture, wherein the cover may move from the closed position to an open position, in which a gas flow path through the aperture is established, and wherein, in the open position, at least a part of the cover protrudes inwardly into the internal volume, and wherein a locking mechanism is provided to lock the cover in the open position.

Preferably, at least a part of the cover protrudes further inwardly into the internal volume than is the case when the cover is in the closed position.

Conveniently, the cover may pivot with respect to the wall, and the cover pivots inwardly to move from the closed position to the open position.

Advantageously, when the cover moves from the closed position to the open position, a first part of the cover moves inwardly into the internal volume and a second part of the cover moves outwardly away from the internal volume.

Preferably, a geometric central point of the cover, or of a part of the cover that moves when the cover moves from the closed position to the open position, protrudes further inwardly into the container with respect to the wall in the open position than in the closed position.

Conveniently, the outer surface of the rigid wall, in the region of the aperture, at least substantially defines a plane, and where when the cover is in the open position no part of the cover protrudes outwardly of the plane.

Preferably, when the cover moves from the closed position to the open position, a first component moves with respect to a second component from an initial position to a final position, and the first component is deformed or distorted when it is in the first position, and alters its shape once it is in the second open position, so that the first component is blocked by the second component from returning to the initial position, and the cover is thus prevented from being returned to the closed position.

Conveniently, the first component is a detent.

Advantageously, the first component is spring-loaded.

Preferably, the air-bag module further comprises an air-bag which, in its initial configuration, is contained within the container.

Conveniently, the air-bag has a gas inlet, through which pressurised gas may be introduced into the interior of the air-bag, and a separate gas outlet through which gas may be vented through the aperture.

Advantageously, the interior of the air-bag is in fluid communication with the interior of the container, and wherein the container has a separate gas inlet aperture formed therein to allow gas to be introduced into the interior of the container and air-bag.

Preferably, the air-bag comprises two or more covers.

A further aspect of the invention provides a vehicle including an air-bag module according to any of the above.

In order that the present invention may be more readily understood, embodiments thereof will now be described, by way of example, with reference to the accompany drawings, in which:
figure 1 shows a first valve;
figure 2 shows the first valve installed in a wall of a container;
figure 3 is a cut-away view of a part of an air-bag attached to the first valve;
figures 4 and 5 show the valve installed in two different types of air-bag module;
figures 6 to 9 show a second valve;
figures 10 and 11 show a third valve;
figures 12 to 14 show a fourth valve;
figures 15 and 16 show a further valve; and
figures 17a - 17c show the further valve in operation.

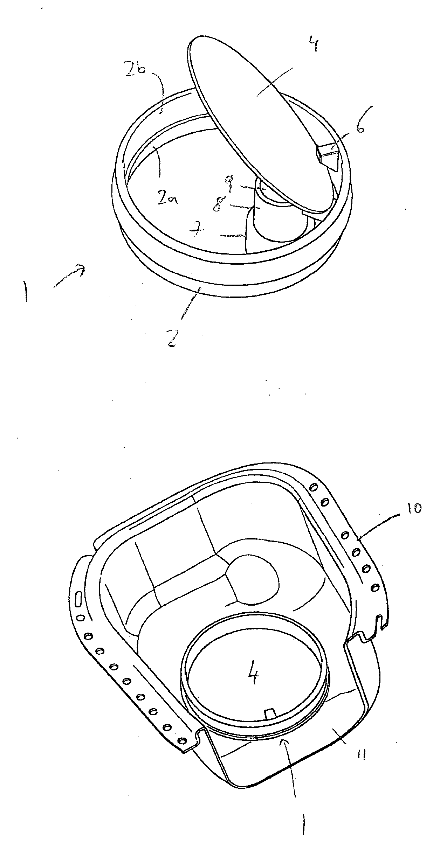

Turning firstly to figure 1, a ventilation valve 1 is shown. The valve 1 comprises a rigid rim 2, which in the embodiment shown is generally circular in cross-section. The rim 2 defines an aperture 3 passing therethrough.

A closure 4, in the form of a lid, is also provided. The closure 4 is sized and shaped to fit within the rim 2 so that it substantially entirely blocks the aperture 3.

In the embodiment shown the rim 2 is formed to have a first portion 2a, at a first end thereof, with a first internal diameter and a second portion 2b, at a second end thereof, having a second, greater internal diameter, with a shoulder 5 being formed between the first and second portions, 2a,2b. The closure 4 may fit inside the second portion 2b but be too large to fit through the aperture 3 formed by the first portion 2a. The closure 4 may therefore rest on the shoulder 5 and substantially completely block the aperture 3.
When the closure 4 completely, or substantially, completely, blocks the aperture 3 the valve 1 is in a first, closed configuration.

The closure 4 is hingedly attached to an inner surface of the rim 2 so that it may pivot with respect to the rim 2. The shoulder 5 prevents the closure 4 from pivoting toward the first position 2a of the rim 2. The closure 4 may, however, pivot in the opposite direction, so that it is lifted away from the shoulder 5. A stop member 6, which is preferably formed as part of the rim 2, prevents the closure 4 from pivoting beyond a desired angle. Figure 1 shows the valve 1 in a second, open configuration, with the closure 4 tilted as far as the stop member 6 will allow.

An actuator 7 is provided to drive the closure 4 from the closed configuration to the open configuration. In the embodiment shown the actuator 7 comprises a cylinder 8 having a piston 9 which may be driven with respect to the cylinder 8. The cylinder 8 is fixed in place with respect to the rim 2 and positioned so that, when the piston 9 is driven with respect to the cylinder 8, the piston 9 bears against the surface of the closure 4 and drives the closure 4 from the closed to the open position. The driving end of the piston 9 may be inclined or chamfered (or otherwise suitably shaped) to assist with this process.

Once the closure 4 reaches the open position, it is locked in place so that it may not return to the closed position. This may be achieved, for example, by including one or more spring-loaded catches or detents (not shown) on the piston 9 which spring outwardly once it has advanced by a certain amount with respect to the cylinder 8, thus preventing the piston 9 from being pushed back into the cylinder 8.

Figure 2 shows the valve 1 installed in a container 10 for housing an air-bag (not shown). An aperture is formed in a (preferably rigid) wall 11 of the container 10, with the valve 1 being fitted into the aperture so that, when the closure 4 is in the closed position, the valve 1 completely or substantially seals the aperture. When the closure 4 moves to the open position, as shown in figure 1, a gas pathway is established through the aperture.

It will be noted from the arrangement shown in figure 2 that, when the closure 4 moves from the closed position to the open position, the closure 4 moves inwardly, into the interior of the container 10, rather than outwardly into the space immediately around the container 10. It will be appreciated that this arrangement is advantageous as it is not necessary to ensure that a space is left immediately around the outside of the valve 1 to allow the valve 1 to open, thus allowing more efficient use of space. There is also less likelihood of the valve 1 being blocked and/or prevented from opening by a foreign object.

In use, the container 10 is intended to form part of an air-bag module which is initially sealed and contains a folded air-bag (not shown in figure 2). When the module is activated pressurised gas will be introduced into the interior of the air-bag, as is known in the art, and the inflating air-bag will burst through a part of the module (for instance, through a panel surrounded by pre-weakened lines) and expand.

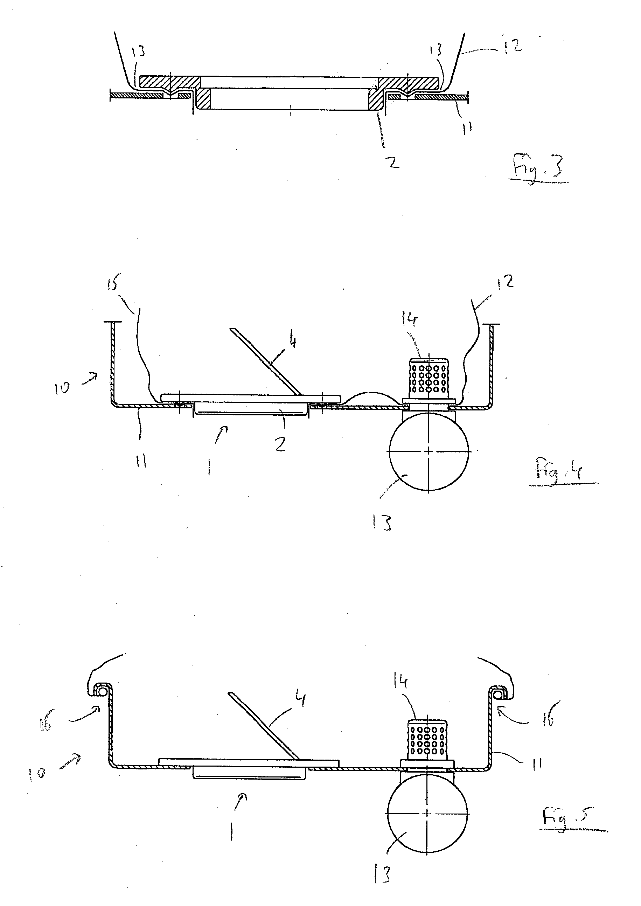

Turning to figure 3, in embodiments of the invention the air-bag 12 has a venting aperture formed therethrough, with the edges 13 of the venting aperture being gripped tightly between the rim 2 of the valve 1 and the wall 11 of the container 10. The edges 13 of the venting aperture of the air-bag 12 are held tightly in place between the rim 2 and wall 11 substantially all of the way around the venting aperture.

In embodiments of the invention, a separate tube or trunk of the air-bag branches away from the remainder of the air-bag and is attached to the valve 1, with an open end of the tube or trunk comprising the venting aperture, as will become clear from the discussion below.

Figure 4 shows a schematic view of an air-bag module embodying the present invention following activation thereof. An inflator 13, which may be of any known type, is provided to generate gas to inflate the air-bag 12. A diffuser 14 of the inflator 13 protrudes through an inflation aperture in the wall 11 of the container 10. A separate tube or trunk 15 of the air-bag 12 is attached to the valve 1, as discussed above. It will therefore be understood that, in embodiments such as this, the location at which the valve 1 is attached to the air-bag 12 is separate from the location at which pressurised gas is introduced into the air-bag 12. This need not be the case, however.

In figure 4 the closure 4 of the valve 1 is shown in the open position. It will therefore be understood that the valve 1 establishes a gas flow path between the interior of the air-bag 12 and the exterior of the container 10.

As discussed above, it will be noted that the closure 4 opens inwardly, into the space inside the container 10, and does not open outwardly into the surrounding space.

Returning to figure 5, a so-called "hybrid" air-bag, is shown, in which the container 10 has a substantially rigid wall 11 to which the air-bag 12 is attached by seals 16, so that the interior of the container 11 and the air-bag 12 form a unitary chamber. The air-bag 12 is initially rolled and/or folded within the container 10, and pressurised gas can then be introduced into the interior of the container 11 by an inflator, thus inflating the air-bag 12.

In this embodiment, the valve 1 can simply be installed in the wall of the container 11 and the air-bag 12 does not need to be attached to the valve in order to allow the valve to vent gas from the air-bag 12 to the exterior of the container 10.

Once again, the closure 4 of the valve 1 opens inwardly into the interior of the container 10, rather than outwardly.

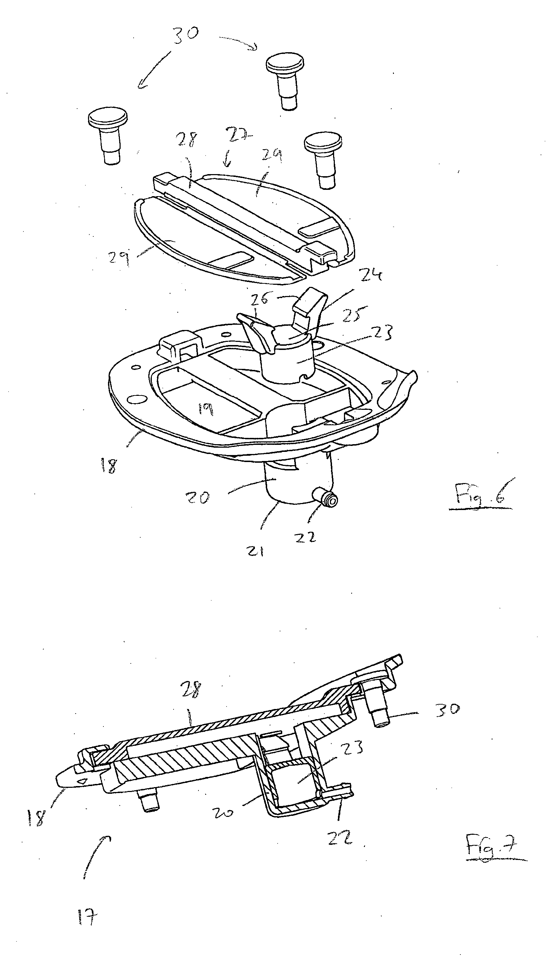

Turning to figures 6 to 9, a second embodiment of a valve 17 is shown.

With reference firstly to figure 6, components of the valve 17 are shown in exploded view. A generally ring-shaped rim 18 has a central aperture 19 passing therethrough. A cylinder 20 is also provided, spaced apart from the plane of the rim 18, with an open top end facing toward the plane of the rim 18. The bottom end 21 of the cylinder 20 is closed, and a gas inlet 22 is formed to allow gas to be introduced into the cylinder 20 near the bottom end 21 thereof. In the embodiment shown in figure 6 the cylinder 20 is formed integrally with the rim 18, but this need not be the case.

A piston 23 is sized and shaped to be received in a snug fit in the cylinder 20. The piston 23 is generally cylindrical and is open at its lower end. The piston 23 also has a pair of upward-facing protrusions 24 provided at its top end 25, each of the protrusions 24 terminating in an engagement surface 26 that slopes inwardly from an outer edge thereof towards an inner edge. It will therefore be understood that the engagement surfaces 26 generally face towards one another, although they are inclined upwardly. When the piston 23 is fully inserted into the cylinder 20, the piston 23 lies generally below the level of the rim 18.

A top surface 27 is attached to the rim 18, and substantially fills the aperture 19 formed therethrough. The top surface 27 comprises a central spine 28, which is fixed to the rim 18, and two side flaps 29, which are each hinged with respect to the central spine 28. In the depicted embodiment the spine 28 and flaps 29 are formed as a unitary item with living hinges being provided between the wings 29 and the flaps 28.

Bolts 30 are provided to fix the valve 17 in place with respect to other components.

Figure 7 shows a cut-away view of the assembled valve 17.

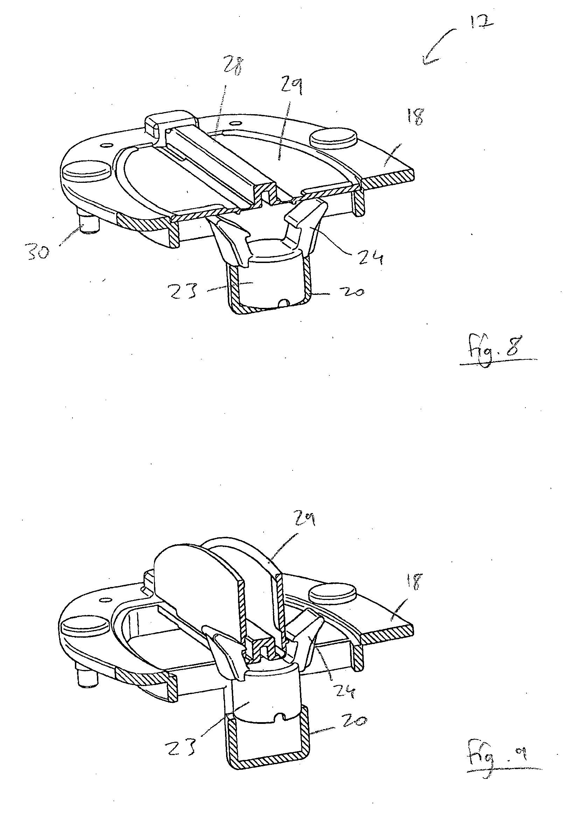

Figure 8 shows a further cut-away view of the assembled valve 17 in its closed configuration, with the top surface 28 substantially filling and closing the aperture 19 formed through the rim 18.

When the valve 17 is to be opened, pressurised gas is introduced into the cylinder 20 through the gas inlet 22. This drives the piston 23 upwardly with respect to the cylinder 20, and the engagement surfaces 26 of the protrusions 24 push the flaps 29 upwardly, so that they pivot with respect to the spine 28. It will be understood that this partially unblocks the aperture 19, thus allowing gas to flow through the valve 17.

In embodiments, once the piston 23 has been driven upwardly by a sufficient amount, hooked portions formed at the inner edges of the protrusions 24 engage with grooves or indentations formed on the inner surfaces of the flaps 29 (not shown), thus locking these components together and ensuring that the flaps 29 remain in the open position.

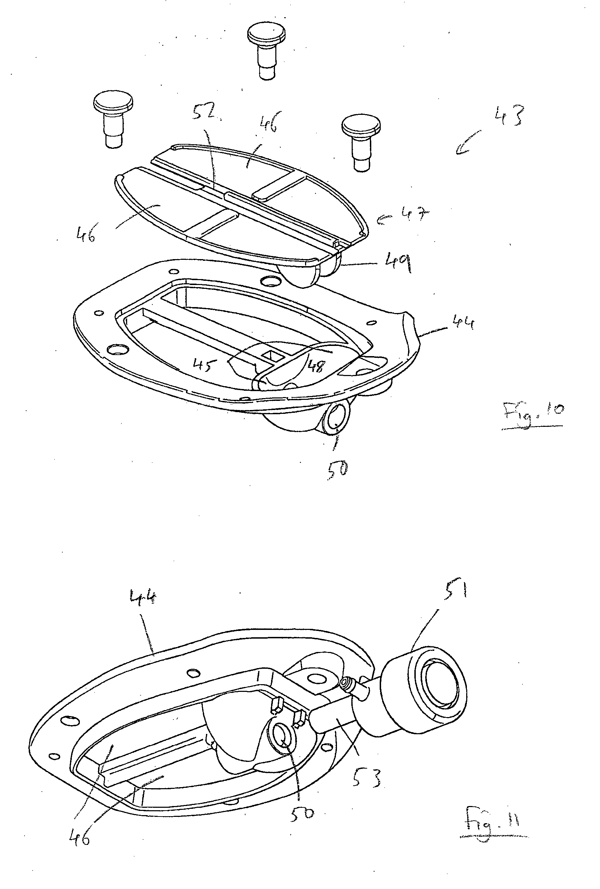

Turning to figures 10 and 11, a third embodiment of a valve 43 is shown.

Figure 11 shows the components of the valve in exploded view, and it will be appreciated that many of the components are similar to those of the second valve 17.

However, the rim 44 is formed with a cavity 48 having two curved ends 45 and an open top side.

The flaps 46 of the top surface 47 each has a downwardly-depending, generally semicircular tab 49 that fits snugly into the cavity 48.

The cavity 48 has an inlet 50, and a gas generator 51 is positioned to deliver pressurised gas into the inlet 50. The gas generator 51 has a delivery tube 53 which protrudes into the inlet 50. The delivery tube 53 preferably has a relatively small flow hole (not shown) on one side thereof.

When the valve 43 is in its closed position, a relatively small, generally enclosed volume is defined between the two tabs 49 of the flaps 46 and the walls of the cavity 48, with the inlet 50 being positioned so that, if pressurised air is delivered through the inlet 50, it is delivered into this enclosed volume. When the valve 43 is to be opened, pressurised gas is delivered into the inlet 50 from the delivery tube 53 of the gas generator 51. When the pressure of gas in the volume defined between the two tabs 49 reaches a sufficiently high level, the tabs 49 will be driven away from one another, and this will cause the flaps 46 to pivot upwardly with respect to the spine 52 of the top surface 47, thus opening the flaps 46 in a similar manner to that shown in figure 9. As this occurs, the tabs 49 will also pivot and will travel within the curved edges 45 of the cavity 48 until the tabs 49 travel out of the open top surface of the cavity 48 and pressurised gas can escape from the cavity 48 around the edges of the tabs 49. At this point, the flaps 46 will be fully open.

The relatively small flow hole of the delivery tube 53 limits the rate of flow of gas into the enclosed volume, which prevents the pressure in the enclosed volume from increasing too quickly and hence damaging the valve 43, for instance by breaking the flaps 46 away from the valve 43.

In preferred embodiments the valve 43 may lock in the open position. This may be achieved, for example, by forming the tabs 49 to be slightly too large to fit into the cavity 48 without being compressed. Once the tabs 49 have left the cavity 48, they will expand to their original dimensions and will thus be too large to fit back into the cavity 48, so preventing the flaps 46 from returning to the closed position.

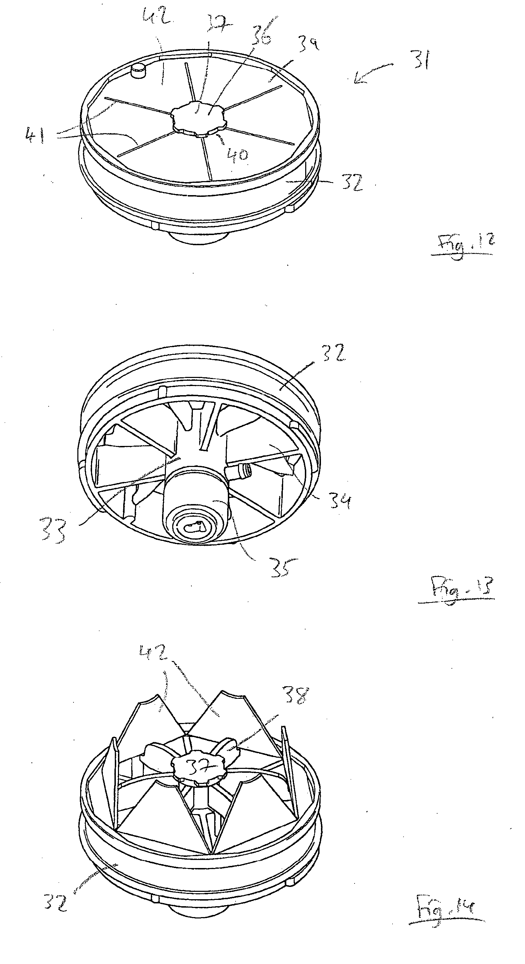

With regard to figures 12 to 14, a fourth valve 31 is shown. The valve 31 has a generally circular rim 32. As can be seen from figure 13, a central cylinder 33 is supported at or around the centre of the rim 32, and is generally coaxial therewith. The central cylinder 33 is held in place by a series of spokes 34 which extend between the cylinder 33 and the rim 32. An actuator 35, which takes the form of a piston, is held within the central cylinder 33.

A piston head 36 extends from a top side of the cylinder 33. The piston head 36 has a central hub 37 and a plurality of driving arms 38 which extend generally radially outwardly from the hub 37, extending towards the rim 32. In the embodiment shown, the driving arms 38 are spaced apart from the spokes 34 so that these components do not interfere with one another.

A cover 39 is generally planar, in an initial state, and substantially fills the cross-sectional space within the rim 32. The cover 39 has a central aperture 40 through which the hub 37 of the piston head 36 protrudes in a close fit. A number of radial slits 41 extend generally radially outwardly from the central aperture 40 towards the edge of the cover 39, but in preferred embodiments do not reach the edge.

The regions between adjacent radial slits 41 comprise flaps 42.

When the valve 31 is activated, as shown in figure 14, the piston head 36 is driven upwardly with respect to the rim 32 and central cylinder 33. It will be understood that each of the driving arms 38 pushes against the underside of one of the flaps 42, so that each of the flaps 42 pivots upwardly with respect to the rim 32, with the part of the flap 42 that had reached the central aperture 40 forming the free end of the flap 42 as it pivots.

It will therefore be understood that a substantial air flow passage will be opened through the rim 32.

While it is preferred that the cover 39 is formed with radial slits 41, in other embodiments the slits 41 are replaced by radial lines of weakness. The lines of weakness may be formed in any suitable matter, for instance scoring or perforation, or through moulding the cover 39 to have a reduced thickness in these areas. The lines of weakness are formed so that they break when the piston head 36 is driven upwardly.

In preferred embodiments the piston head 36 may lock in its advanced position to prevent the flaps 42 from returning to their original, closed positions. This may be achieved, for instance, by providing a part of the piston head 36 that is slightly wider than the internal diameter of the cylinder 33, and which springs outwardly once it has moved out of the cylinder 33, thus preventing the piston head 36 from being pushed back into the cylinder 33.

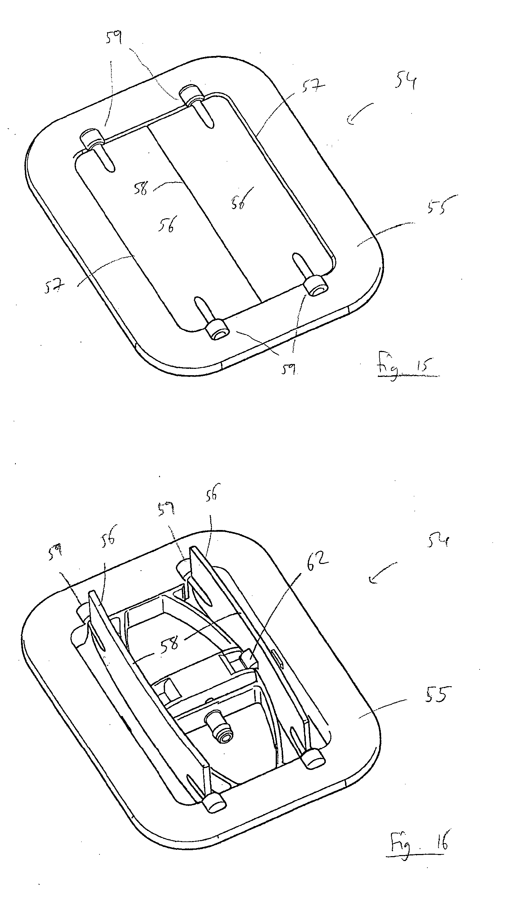

Figures 15 and 16 show a fifth valve 54 embodying the invention. As with other embodiments described above, the fifth valve 54 includes a rim 55 and a pair of covers 56 which, in a closed position (as shown in figure 15) substantially close an aperture defined by the rim 55. The aperture is generally rectangular, with rounded corners, and each cover 56 occupies half of the aperture, having an outer side 57 that lies against the rim 55 and an inner side 58 that extends across the middle of the aperture.

The covers 56 are each attached to the rim 55 by two hinges 59, which allow the cover 56 to pivot with respect to the rim 55 about a hinging axis passing between the hinges 59. For each cover 56, the hinges 59 are positioned so that the hinging axis lies between the outer and inner edges 57, 58, but is closer to the outer edge 57 than the inner edge 58.

The valve 54 is shown in figure 16 in the open position. It will be understood that, when the covers 56 open, they each pivot about the respective hinging axis, so that the part of the cover 56 that extends between the hinging axis and the outer edge 57 moves downwardly with respect to the rim 55 (i.e. outwardly from the container on which the valve 54 is mounted), and the part of the cover between the hinging axis and the inner, free edge 58 moves upwardly with respect to the rim 55 (i.e. inwardly into the container).

It will therefore be understood that the covers 56 are more balanced with respect to the hinges 59 than are, for example, the covers shown in figures 6 to 11, in which the covers are hinged from one side. This means that the covers 56 will require less force to be applied to them to move to the open position, and will also not require such a strong locking mechanism to keep them in the open position.

Clips 62 are provided on the undersides of the covers 56 to lock the covers 56 in the open position.

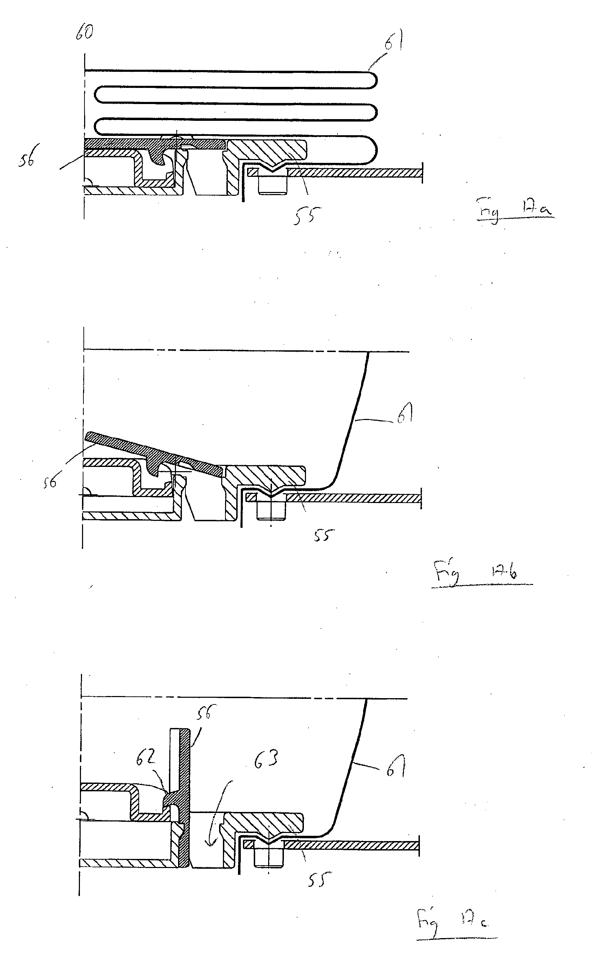

Figures 17a - 17c show one half of the valve 54 in use (in these figures, a line 60 is an axis of symmetry of the valve 54 and only one of the covers 56 is shown). In figure 17a it can clearly be seen that the air-bag 61 is folded tightly within the container, and presses against the cover 56. However, following inflation of the air-bag there is ample space within the container for the cover 56 to move to the open position, as shown in figures 17b and 17c, thus opening an air flow passage 63 to allow air to escape from the interior of the air-bag 61.

It will be appreciated that embodiments of the present invention provide an advantageous air-bag housing, which will require less space to be set aside than is the case for prior art designs.

In this specification it is described that a closure, flap or cover of the valve opens inwardly with respect to the container. This may involve at least a part of the closure, flap or cover protruding further inwardly into the internal volume of the container than is the case when the closure, flap or cover is in the closed position.

Additionally or alternatively, the closure, flap or cover may pivot with respect to the wall, and the closure, flap or cover pivots inwardly to move from the closed position to the open position.

Additionally or alternatively, a geometric central point of the closure, flap or cover, or of a part of the closure, flap or cover that moves when the closure, flap or cover moves from the closed position to the open position, protrudes further inwardly into the container with respect to the wall in the open position than in the closed position.

Additionally or alternatively, the outer surface of the rigid wall, in the region of the aperture, at least substantially defines a plane, and when the closure, flap or cover is in the open position no part of the closure, flap or cover protrudes outwardly of the plane.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag module comprising:
a container (10) having at least one rigid wall (11) and defining an internal volume;
an apertures formed in the rigid wall (11); and
a cover (4, 29, 46, 42, 56) which at least substantially covers the aperture in a closed position and substantially prevents the flow of gas through the aperture,
wherein the cover (4, 29, 46, 42, 56) may move from the closed position to an open position, in which a gas flow path through the aperture is established, and wherein, in the open position, at least a part of the cover (4, 29, 46, 42, 56) protrudes inwardly into the internal volume, and
wherein a locking mechanism (24, 38, 62) is provided to lock the cover (4, 29, 46, 42, 56) in the open position.

2. An air-bag module according to claim 1 wherein, when the cover (4, 29, 46, 42, 56) is in the open position, at least a part of the cover (4, 29, 46, 42, 56) protrudes further inwardly into the internal volume than is the case when the cover (4, 29, 46, 42, 56) is in the closed position.

3. An air-bag module according to claims 1 or 2 wherein the cover (4, 29, 46, 42, 56) may pivot with respect to the wall (11), and the cover (4, 29, 46, 42, 56) pivots inwardly to move from the closed position to the open position.

4. An air-bag module according to any preceding claim wherein, when the cover (56) moves from the closed position to the open position, a first part of the cover (56) moves inwardly into the internal volume and a second part of the cover (56) moves outwardly away from the internal volume.

5. An air-bag module according to any preceding claim, wherein a geometric central point of the cover (4, 29, 46, 42, 56), or of a part of the cover (4, 29, 46, 42, 56) that moves when the cover (4, 29, 46, 42, 56) moves from the closed position to the open position, protrudes further inwardly into the container with respect to the wall (11) in the open position than in the closed position.

6. An air-bag module according to any preceding claim wherein the outer surface of the rigid wall (11), in the region of the aperture, at least substantially defines a plane, and where when the cover (4, 29, 46, 42) is in the open position no part of the cover (4, 29, 46, 42) protrudes outwardly of the plane.

7. An air-bag module according to any preceding claim wherein, when the cover (4, 29, 46, 42, 56) moves from the closed position to the open position, a first component (24) moves with respect to a second component from an initial position to a final position, and the first component (24) is deformed or distorted when it is in the first position, and alters its shape once it is in the second open position, so that the first component (24) is blocked by the second component from returning to the initial position, and the cover (4, 29, 46, 42, 56) is thus prevented from being returned to the closed position.

8. An air-bag module according to claim 7, wherein the first component (24) is a detent.

9. An air-bag module according to claim 7, wherein the first component is spring-loaded.

10. An air-bag module according to any preceding claim further comprising an air-bag (12, 61) which, in its initial configuration, is contained within the container (10).

11. An air-bag module according to claim 10 wherein the air-bag (12, 61) has a gas inlet, through which pressurised gas may be introduced into the interior of the air-bag (12, 61), and a separate gas outlet (3, 63) through which gas may be vented through the aperture (3).

12. An air-bag module according to claim 10 wherein the interior of the air-bag (12, 61) is in fluid communication with the interior of the container (10), and wherein the container (10) has a separate gas inlet aperture formed therein to allow gas to be introduced into the interior of the container (10) and air-bag (12. 61).

13. An air-bag module according to any preceding claim comprising two or more covers (29, 36, 42, 56).

14. A vehicle including an air-bag module according to any preceding claim.

## Patentansprüche

1. Airbagmodul, umfassend:
einen Behälter (10), der mindestens eine starre Wand (11) aufweist und ein Innenvolumen definiert;
eine Öffnung, die in der starren Wand (11) ausgebildet ist; und
eine Abdeckung (4, 29, 46, 42, 56), die in einer geschlossenen Stellung zumindest im Wesentlichen die Öffnung abdeckt und das Strömen von Gas durch die Öffnung im Wesentlichen verhindert,
wobei sich die Abdeckung (4, 29, 46, 42, 56) aus der geschlossenen Stellung in eine offene Stellung bewegen kann, in der ein Gasströmungsweg durch die Öffnung hergestellt ist, und wobei, in der offenen Stellung, zumindest ein Teil der Abdeckung (4, 29, 46, 42, 56) nach innen in das Innenvolumen ragt, und
wobei ein Arretiermechanismus (24, 38, 62) vorgesehen ist, um die Abdeckung (4, 29, 46, 42, 56) in der offenen Stellung zu arretieren.

2. Airbagmodul nach Anspruch 1, wobei, wenn die Abdeckung (4, 29, 46, 42, 56) sich in der offenen Stellung befindet, zumindest ein Teil der Abdeckung (4, 29, 46, 42, 56) weiter nach innen in das Innenvolumen ragt, als es der Fall ist, wenn sich die Abdeckung (4, 29, 46, 42, 56) in der geschlossenen Stellung befindet.

3. Airbagmodul nach Anspruch 1 oder 2, wobei die Abdeckung (4, 29, 46, 42, 56) bezogen auf die Wand (11) schwenken kann, und die Abdeckung (4, 29, 46, 42, 56) nach innen schwenkt, um sich aus der geschlossenen Stellung in die offene Stellung zu bewegen.

4. Airbagmodul nach einem vorhergehenden Anspruch, wobei, wenn sich die Abdeckung (56) aus der geschlossenen Stellung in die offene Stellung bewegt, ein erster Teil der Abdeckung (56) sich nach innen in das Innenvolumen bewegt und ein zweiter Teil der Abdeckung (56) sich nach außen weg von dem Innenvolumen bewegt.

5. Airbagmodul nach einem vorhergehenden Anspruch, wobei ein geometrischer Mittelpunkt der Abdeckung (4, 29, 46, 42, 56), oder eines Teils der Abdeckung (4, 29, 46, 42, 56), der sich bewegt, wenn sich die Abdeckung (4, 29, 46, 42, 56) aus der geschlossenen Stellung in die offene Stellung bewegt, bezogen auf die Wand (11) in der offenen Stellung weiter nach innen in den Behälter ragt als in der geschlossenen Stellung.

6. Airbagmodul nach einem vorhergehenden Anspruch, wobei die Außenfläche der starren Wand (11), im Bereich der Öffnung, zumindest im Wesentlichen eine Ebene definiert, und wo, wenn sich die Abdeckung (4, 29, 46, 42) in der offenen Stellung befindet, kein Teil der Abdeckung (4, 29, 46, 42) aus der Ebene nach außen ragt.

7. Airbagmodul nach einem vorhergehenden Anspruch, wobei, wenn sich die Abdeckung (4, 29, 46, 42, 56) aus der geschlossenen Stellung in die offene Stellung bewegt, ein erster Bestandteil (24) sich bezogen auf einen zweiten Bestandteil aus einer Ausgangsstellung in eine Endstellung bewegt, und der erste Bestandteil (24) verformt oder verbogen ist, wenn er sich in der ersten Stellung befindet, und seine Form verändert, sobald er sich in der zweiten offenen Stellung befindet, sodass der erste Bestandteil (24) von dem zweiten Bestandteil daran gehindert wird, in die Ausgangsstellung zurückzukehren, und so verhindert wird, dass die Abdeckung (4, 29, 46, 42, 56) in die geschlossene Stellung zurückgeführt wird.

8. Airbagmodul nach Anspruch 7, wobei es sich bei dem ersten Bestandteil (24) um eine Rasteinrichtung handelt.

9. Airbagmodul nach Anspruch 7, wobei der erste Bestandteil gefedert ist.

10. Airbagmodul nach einem vorhergehenden Anspruch, ferner umfassend einen Airbag (12, 61), der in seiner Ausgangsgestalt in dem Behälter (10) aufgenommen ist.

11. Airbagmodul nach Anspruch 10, wobei der Airbag (12, 61) eine Gaseinströmöffnung aufweist, durch die unter Druck stehendes Gas in das Innere des Airbags (12, 61) eingeleitet werden kann, und eine getrennte Gasausströmöffnung (3, 63), durch die Gas durch die Öffnung (3) abgelassen werden kann.

12. Airbagmodul nach Anspruch 10, wobei das Innere des Airbags (12, 61) mit dem Inneren des Behälters (10) über ein Fluid in Verbindung steht, und wobei der Behälter (10) eine darin ausgebildete getrennte Gaseinströmöffnung aufweist, um zu ermöglichen, dass Gas in das Innere des Behälters (10) und Airbags (12, 61) eingeleitet wird.

13. Airbagmodul nach einem vorhergehenden Anspruch, der zwei oder mehr Abdeckungen (29, 36, 42, 56) umfasst.

14. Fahrzeug, das ein Airbagmodul nach einem vorhergehenden Anspruch aufweist.

## Revendications

1. Module d'airbag comprenant :
un contenant (10) présentant au moins une paroi rigide (11) et définissant un volume intérieur ;
une ouverture formée dans la paroi rigide (11) ; et
un couvercle (4, 29, 46, 42, 56) qui recouvre au moins essentiellement l'ouverture dans une position fermée et empêche essentiellement l'écoulement de gaz à travers l'ouverture ;
dans lequel le couvercle (4, 29, 46, 42, 56) peut se déplacer de la position fermée à une position ouverte, dans laquelle une voie d'écoulement de gaz à travers l'ouverture est réalisée, et dans lequel, dans la position ouverte, au moins une partie du couvercle (4, 29, 46, 42, 56) dépasse vers l'intérieur dans le volume intérieur, et
dans lequel un mécanisme de verrouillage (24, 38, 62) est prévu pour verrouiller le couvercle (4, 29, 46, 42, 56) dans la position ouverte.

2. Module d'airbag selon la revendication 1, dans lequel, quand le couvercle (4, 29, 46, 42, 56) est dans la position ouverte, au moins une partie du couvercle (4, 29, 46, 42, 56) dépasse plus loin vers l'intérieur dans le volume intérieur que cela n'est le cas quand le couvercle (4, 29, 46, 42, 56) est dans la position fermée.

3. Module d'airbag selon les revendications 1 ou 2, dans lequel le couvercle (4, 29, 46, 42, 56) peut pivoter par rapport à la paroi (11), et le couvercle (4, 29, 46, 42, 56) pivote vers l'intérieur pour se déplacer de la position fermée à la position ouverte.

4. Module d'airbag selon une quelconque revendication précédente, dans lequel quand le couvercle (56) se déplace de la position fermée à la position ouverte, une première partie du couvercle (56) se déplace vers l'intérieur dans le volume intérieur et une seconde partie du couvercle (56) se déplace vers l'extérieur loin du volume intérieur.

5. Module d'airbag selon une quelconque revendication précédente, dans lequel un point central géométrique du couvercle (4, 29, 46, 42, 56), ou d'une partie du couvercle (4, 29, 46, 42, 56) qui se déplace quand le couvercle (4, 29, 46, 42, 56) se déplace de la position fermée à la position ouverte, dépasse plus loin vers l'intérieur dans le contenant par rapport à la paroi (11) dans la position ouverte que dans la position fermée.

6. Module d'airbag selon une quelconque revendication précédente, dans lequel la surface extérieure de la paroi rigide (11), dans la zone de l'ouverture, définit au moins essentiellement un plan, et où quand le couvercle (4, 29, 46, 42) est dans la position ouverte, aucune partie du couvercle (4, 29, 46, 42) ne dépasse du plan vers l'extérieur.

7. Module d'airbag selon une quelconque revendication précédente, dans lequel, quand le couvercle (4, 29, 46, 42, 56) se déplace de la position fermée à la position ouverte, un premier composant (24) se déplace d'une position initiale à une position finale par rapport à un second composant, et le premier composant (24) est déformé ou distordu quand il est dans la première position, et change de forme une fois qu'il est dans la seconde position ouverte, de sorte que le premier composant (24) est bloqué par le second composant et ne peut pas retourner à la position initiale, et le retour du couvercle (4, 29, 46, 42, 56) dans la position fermée est ainsi empêché.

8. Module d'airbag selon la revendication 7, dans lequel le premier composant (24) est un élément d'encliquetage.

9. Module d'airbag selon la revendication 7, dans lequel le premier composant est à ressort.

10. Module d'airbag selon une quelconque revendication précédente, comprenant en outre un airbag (12, 61) qui, dans sa configuration initiale, est contenu à l'intérieur du contenant (10).

11. Module d'airbag selon la revendication 10, dans lequel l'airbag (12, 61) présente une entrée de gaz, à travers laquelle du gaz sous pression peut être introduit à l'intérieur de l'airbag (12, 61), et une sortie de gaz séparée (3, 63) à travers laquelle du gaz peut être évacué à travers l'ouverture (3).

12. Module d'airbag selon la revendication 10, dans lequel l'intérieur de l'airbag (12, 61) est en communication fluidique avec l'intérieur du contenant (10), et dans lequel le contenant (10) présente une ouverture d'entrée de gaz séparée formée dans celui-ci pour permettre à du gaz d'être introduit à l'intérieur du contenant (10) et de l'airbag (12, 61).

13. Module d'airbag selon une quelconque revendication précédente, comprenant deux couvercles (29, 36, 42, 56) ou plus.

14. Véhicule comprenant un module d'airbag selon une quelconque revendication précédente.
